# EUROPEAN PATENT SPECIFICATION

(11) **EP 1 976 246 B1**
(45) Date of publication and mention of the grant of the patent: **02.06.2010**
(21) Application number: 07105171.8
(22) Date of filing: 29.03.2007
(51) Int. Cl.: H04M 1/60, H04M 1/05, H04M 1/725

(54) **Multi-button control headset for a mobile communication device**
Kontrollheadset mit mehreren Knöpfen für ein mobiles Kommunikationsgerät
Casque de commande à boutons multiples pour dispositif de communication mobile

(43) Date of publication of application: 01.10.2008
(73) Proprietor: Research In Motion Limited, Waterloo, Ontario N2L 3W8 (CA)
(72) Inventor: Lowles, Robert, Waterloo, Ontario N2T 2J5 (CA); Hui, Edward, Waterloo, Ontario N2T 2J3 (CA); Mak-Fan, David, Waterloo, Ontario N2K 4B1 (CA)
(74) Representative: Rickard, David John

(56) References cited:
- WO-A-00/70779
- WO-A2-99/03294
- DE-A1- 19 909 806
- US-A1- 2003 083 114
- US-A1- 2004 136 522
- US-A1- 2004 203 975

## Description

The present invention relates generally to headsets for a mobile communication device. More particularly, the present invention relates to a headset for a mobile communication device having a multi-button control and a standard headset jack.

When mobile communication devices were first developed, their main functionality was to provide a way for individuals to communicate with other individuals without the need for a landline. As the mobile communication device technology improved, further functionalities such as email, a contact database or a calendar were added. In the latest wave of mobile communication devices, new functionality such as an MP3 player and cameras have been added resulting in a multi-purpose mobile communication device.

In order for users to listen to an MP3 player, a headset is typically required which preferably includes a remote control so that the user is able to control the MP3 player within the mobile communication device. However, these headsets are typically individualized for each mobile communication device. Existing headsets include non-standard headset jacks which are then plugged into a corresponding slot within the unique mobile communication device. Therefore users are required to buy a specific headset which is dependent on the mobile communication device they are using.

Currently, headsets with standard jacks which are used with mobile communication devices have only a single button which is used to mute a call or to initiate voice activated dialing. Typically a single press, or a long press, can activate different functions. However, these single button controls can only provide two different control signals.

Alternatively, some headsets with multiple button controls are implemented with non-standard jacks and thusly, the mobile communication devices are required to be updated in order to be able to receive the non-standard jack. Therefore, additional hardware is required in each mobile communication device in order to receive the non-standard jack. Additional conductors are also required in each of the headsets.

It is, therefore, desirable to provide a novel headset for a mobile communication device having a multi-button control using a standard headset jack.

US-A-2003/008311 A discloses a navigational control for a wireless computer resource access device. The control includes headphones and a multiple buttons. A connector secured to the body of the control connects the control to a wireless access device.

### GENERAL

The invention may be directed at a headset for a mobile communication device having a multi-button control and is implemented with a standard headset jack. The multi-buttons control may be decoded by a microprocessor after which an encoded signal is then transmitted, via the microphone line from the processor to the handset. In this manner, by using the standard jack, no additional hardware is required in the handset. Only software to decode the signal on the microphone input may be required on the handset.

In one aspect, there is provided below a headset having a set of speakers for transmitting sound to a user, comprising a standard headset jack plug a multi-button control capable of activating commands on a mobile communication device, the mobile communication device having means for receiving said standard headset jack plug, the multi-button control including: a set of buttons, each representing one of said commands; and a controller, connected to each button of said set of buttons; wherein when said controller detects the depression of one of said buttons in said set of buttons, said controller determines which button was pressed and transmits a control signal via a microphone line to said standard headset jack plug corresponding to said button.

In an embodiment, the controller may be a processor or an application specific integrated circuit (ASIC).

Furthermore, the control signal being transmitted may be encoded in an encoding control signal mode whereby the encoding control signal mode is selected from a group consisting of a multiple presses control signal mode, a pulse train control signal mode, a unique frequency control signal mode, a dual tone multiple frequency (DTMF) control signal mode and a pulse width control signal mode.

Within, one embodiment, the controller may be a database for storing control signal information associated with each of said set of buttons; and a module for associating said button depression with a control signal.

In a further embodiment, there may be provided a headset for a mobile communication device comprising a set of speakers for transmitting sound from the mobile communication device to a user; a multi-button control for controlling sound from the mobile communication device; and a standard jack plug for connecting the headset to the mobile communication device and for transmitting signals from the multi-button control to the mobile communication device to provide sound to the speakers.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Fig. 1 is a schematic diagram of a mobile communication device and headset;
Fig. 2 is a schematic diagram of circuitry for a headset;
Fig. 3 is a schematic diagram of circuitry for a headset in accordance with an embodiment;
Fig. 4 is a diagram of coding schemes for use with the headset;
Fig. 5 is a schematic diagram of circuitry for a headset in accordance with another embodiment; and
Fig. 6 is a flowchart outlining a method of headset use.

### DESCRIPTION OF PREFERRED EMBODIMENTS

Generally, the present embodiment provides a method and system for a headset for a mobile communication device. The headset includes a multi-button control and uses a standard jack for connecting to the mobile communication device.

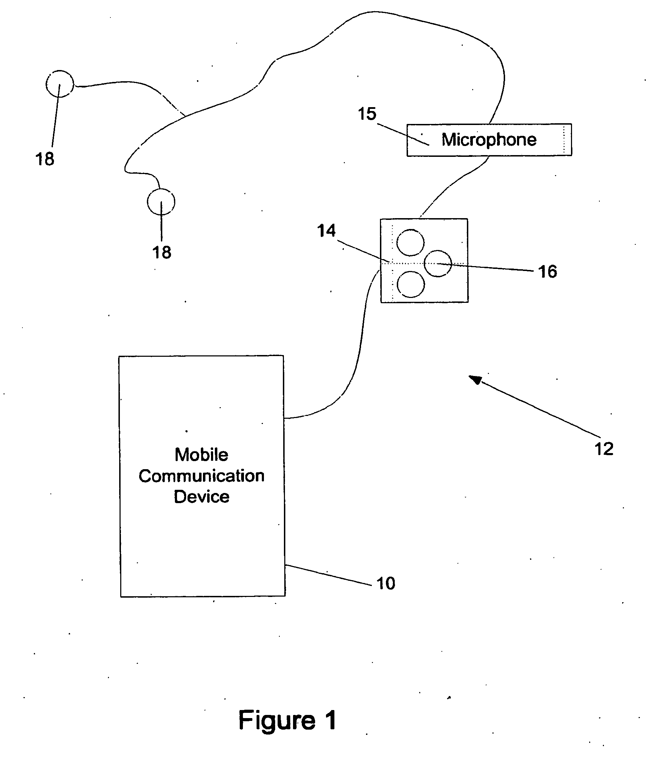

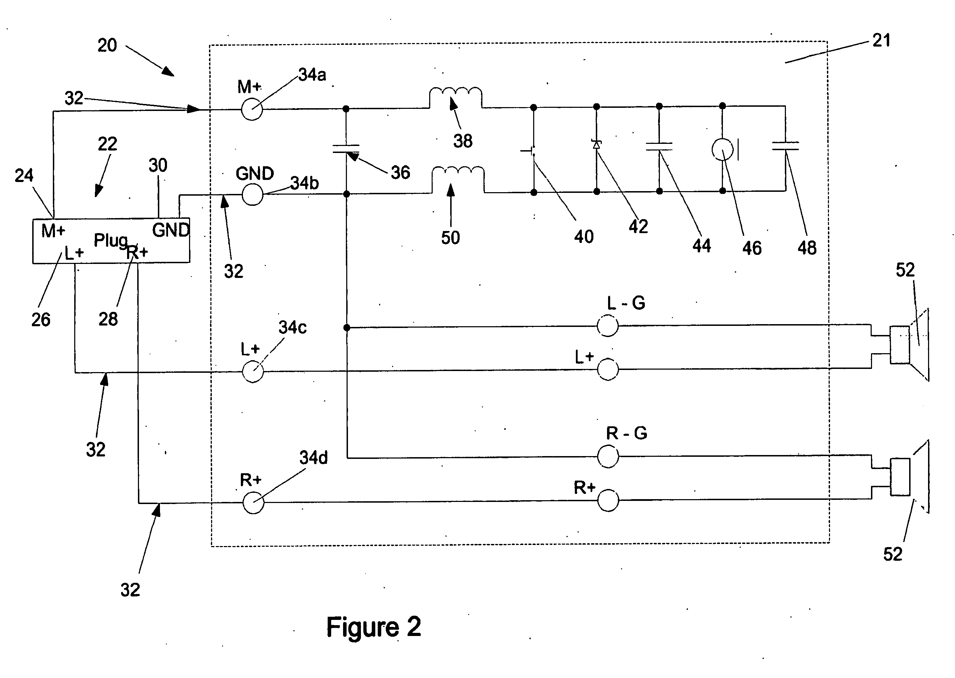

Turning to Figure 1, a schematic diagram of a mobile communication device, or handset, **10** having a headset **12** thereby connected is provided. The headset **12** further comprises a multiple button controller **14** having a plurality of buttons **16.** The number of buttons is theoretically limitless however, the number is dictated by the size of the controller **14.** The headset **12** further includes at least one ear bud **18** each housing a speaker (as shown in Figure 2). The headset **12** is connected to the mobile communication device **10** via standard jack. A microphone **15** is also included in the headset **12.**

Turning to Figure 2, circuitry **20,** typically mounted to a printed circuit board assembly **21,** for a standard headset **12** is shown. The headset **12** includes a standard jack, or plug, **22** for connecting the headset to the handset. The plug **22** comprises a microphone portion **24,** a left speaker portion **26,** a right speaker portion **28** and a ground portion **30.** The jack **22** is connected to the circuitry **20** via a plurality of wires **32.**

In the current embodiment, the circuitry **20** comprises a set of connectors **34** for receiving the wires 32 from their corresponding locations within the jack **22.** The microphone connector **34a** is connected to a first capacitor **36** and an inductor **38.** An output of the inductor **38** is connected to plurality of elements connected in parallel. The plurality of elements includes a switch **40,** a zener diode **42,** a second capacitor **44,** a microphone **46** and a third capacitor **48.** A second inductor **50** is located between the ground connector **34b** and the output of the parallel elements. The output from the second inductor **50** is connected to ground along with one side of a pair of speakers **52.** The left speaker portion connector **34c** and the right speaker portion connector **34d** are also connected to their respective, left and right speakers **52.** As will be understood, the speakers are typically located within the ear buds **18** of the headset **12** which are then inserted into a user's ears so that they may listen of the output from the mobile communication device.

In operation, the zener diode **42** is used to control the electrostatic discharge (ESD) which may be experienced within the headset **12.** The inductor **38** and the first capacitor **36** provide a wide band filter for the various General Packet radio Services (GPRS) bands. This filter reduces and/or prevents the headset from picking up and transmitting GSM pulses via the microphone line. This is also known as GSM buzz. Finally, the switch **40** shorts out the microphone bias current which is detected by the handset as a signal.

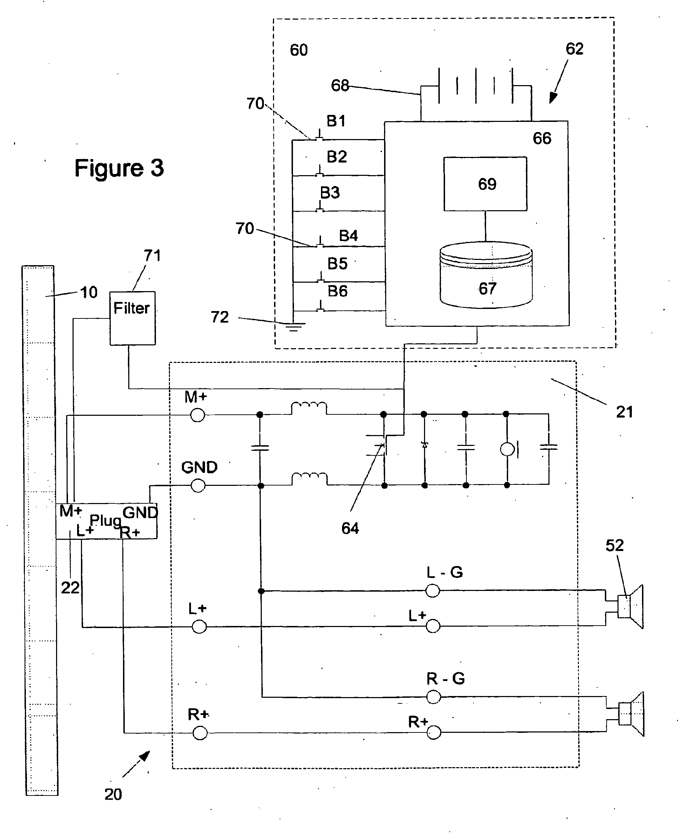

Turning to Figure 3, a schematic diagram of an embodiment of a headset **12** having a multi-button control **60** in accordance with one embodiment is shown. In each of the embodiments, the headset **12** is implemented with the standard headset jack **22** for connection with the mobile communication device **10.** In this embodiment, the circuitry **62** for implementing the multi-button control **60** is shown connected to the standard headset circuitry **20** of Figure 2 with one substitution. The switch **40** is replaced with a Field-Effect Transistor (FET) **64.** The implementation of the multi-button control using a standard headset and standard jack provides the benefit that mobile communication devices do not have to be altered in order to operate with the headset. In this manner, since the mobile communication device does not have to be updated to include extra hardware to receive the headset jack, the mobile communication device may be able to receive the headset disclosed herein or existing headsets with standard jacks and one control button.

Therefore, in order for the handset to recognize which type of headset has been connected, the handset preferably includes circuitry to make this determination. In one embodiment, when the headset detects a microphone bias voltage, a predetermined signal may be transmitted by the headset to be decoded by the handset. This may be implemented by simply connecting an output of a controller **66** to the microphone portion of the plug output of the processor. A filter network **71** may also be located along this connection in order to reduce noise.

The circuitry **62** includes the controller **66,** such as a processor, preferably having low power consumption and a battery **68.** The battery **68** is preferably a rechargeable battery or a super capacitor which may be charged by a microphone bias when the headset is connected to the mobile communication device. If a microphone bias is used, a voltage boost circuit is likely to be required to boost the voltage on the microphone bias to above 1.8 V. Alternatively, the battery may be a one-time use battery and replaced when the power has been entirely discharged from the battery **68.**

A series of switches **70,** representing each button on the multi-button control, is connected to the processor **66.** In Figure 3, the switches **70** have been labeled as B1, B2, B3, B4, B5 and B6. For instance, B1 may represent a mute button, B2 may represent a volume up button, B3 may represent a volume down button, B4 may represent a rewind button, B5 may represent a fast forward button and B6 may represent a play/stop button. As will be understood, the number of switches is limitless but is dependent on the physical size of the multi-button control. Each of the switches is also connected to ground **72.** Within the processor is a memory, or database **67,** for storing control information and a module **69** for determining which switch **70** has been pressed.

In the present embodiment, an output of the processor **66** is connected to the FET **64.** As will be described below with respect to the operation of the control **60,** this connection provides the necessary signals to control the handset.

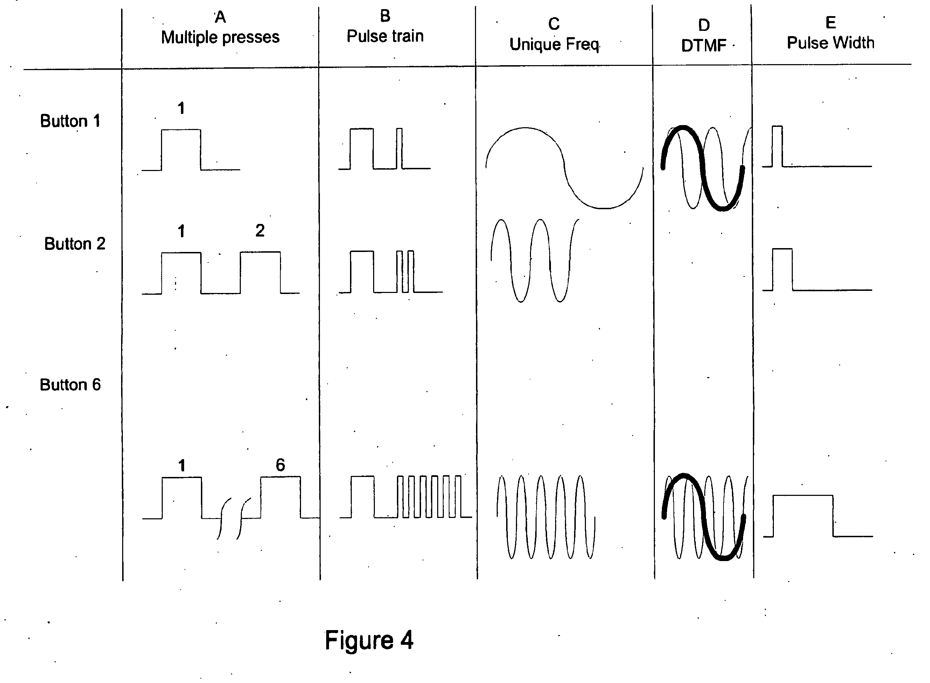

Figure 4 provides examples of various methods of encoding the control signals being transmitted from the headset to the handset. Encoding control signal mode A is directed at multiple presses, encoding control signal mode B is directed at pulse trains, encoding control signal mode C is directed at unique frequencies, encoding control signal mode D is directed a dual tone multiple frequency (DTMF) and encoding control signal mode E is directed at pulse width. It will be understood that each headset preferably operates in only one of the encoding control signal modes but in some embodiments, the headset may operate under multiple control signal modes depending on the required functionality.

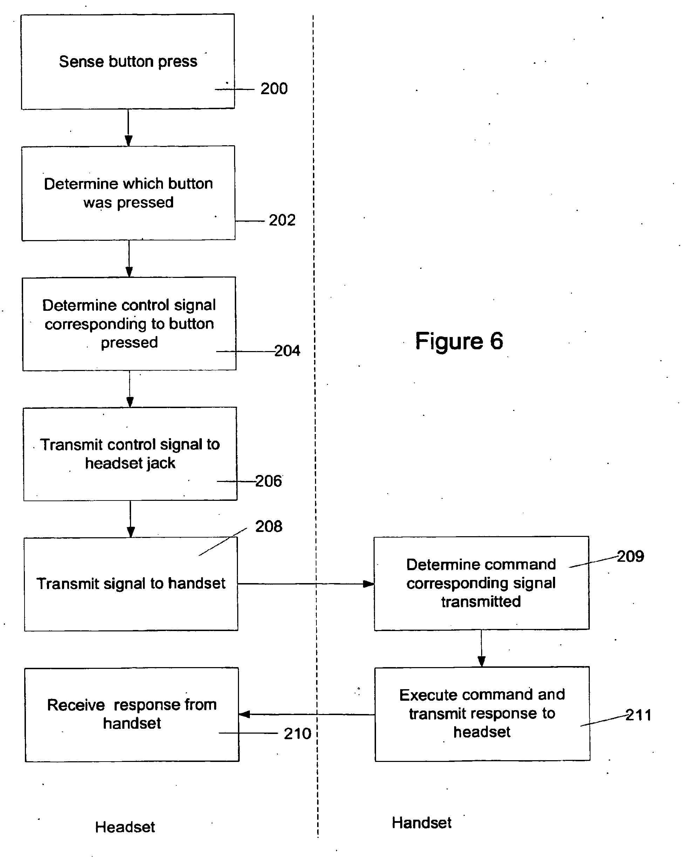

In this embodiment, the circuitry is implemented for a multi-button control **60** operating under control signal mode A, control signal mode B or control signal mode E, as shown in Figure 4. As will be understood, each headset preferably operates in a single control signal mode. However, it will be understood that some embodiments may employ multiple control signal modes. When one of the series of switches **70,** or buttons, is pushed, a signal is transmitted to the processor **66** from the switch. The module **69** within the processor **66** receives this signal (step **200** of Figure 6) and then determines which of the switches **70** has been pressed (step **202).** After determining the switch, the module then accesses the database **67** to determine a control signal corresponding to or associated with the pressed switch **70** (step **204).**

For instance, if the user wishes to play music, after pressing B6, the software module **69** determines B6 was pressed and accesses the database/memory **67** to determine the signal that needs to be transmitted from the multi-button control to play music.

As shown in Figure 4, the signal corresponding to B6 for mode A, is a series of 6 pulses. The pulses are then transmitted from the processor **66** to the FET **64.** The pulses are recognized by the FET **64** which then translates this pulse signal to the jack **22** (step **206)** by shorting out the microphone to ground. The jack **22** then transmits this information to the handset (step **208**) which receives the pulse signal. A processor within the handset then processes the pulse signal to determine the command corresponding to the signal transmitted (step **209).** In this example, the processor determines that a play music command has been issued and then executes the command and transmits the response to the headset (step **211).** Therefore, in this example, the mobile communication device plays music which is then transmitted back through the jack **22** to the headset which then receives the response and transmits the music to the speakers (step **210).**

The user is then able to enjoy listening to music on their headset. Similarly, if music is already playing, the user may choose to stop the music, turn the volume up or down by pressing the relevant button. As before, the method outlined in Figure 6 is performed to transmit the necessary signal to the handset to have the command be performed.

In an alternative embodiment, for instance if the multiple button control was operating in encoding control signal mode B, using a pulse train, the nature of the signals being transmitted from the processor to the headset are shown in Figure 4. A start pulse is typically transmitted to the FET indicating that a button has been pressed. The start pulse is then followed up with a series of pulses corresponding to the button number that was pressed. For instance if B1 is pressed, a single pulse is provided after the start pulse, if B2 is pressed, two pulses are provided. Similar pulse streams are provided for buttons B3, B4, B5 and B6.

In a more specific example, the start pulse may be a 20ms pulse with a 10ms break before the transmission of the stream of control signal pulses, each pulse lasting for 1 ms.

In another embodiment, when square wave pulses are used, the circuitry further includes a set of electronic elements which limit the slew rate of the square wave pulse in order to reduce the potential of the buttons from being heard in the audio transmitted to the speakers. In one embodiment, this may be implemented by adding a resistor/capacitor (RC) network between the FET and the processor **66.** Finer slew rate control may be implemented by standard pulse width modulation (PWM) methods.

The pulse train is then transmitted from the FET to the headset **10** via the jack **22.** The processor within the headset **10** recognizes the start pulse and processes the following series of pulses to determine which button is pressed. After determining the command from the control, the mobile communication proceeds to execute the demand and the result is transmitted to the user via the speakers.

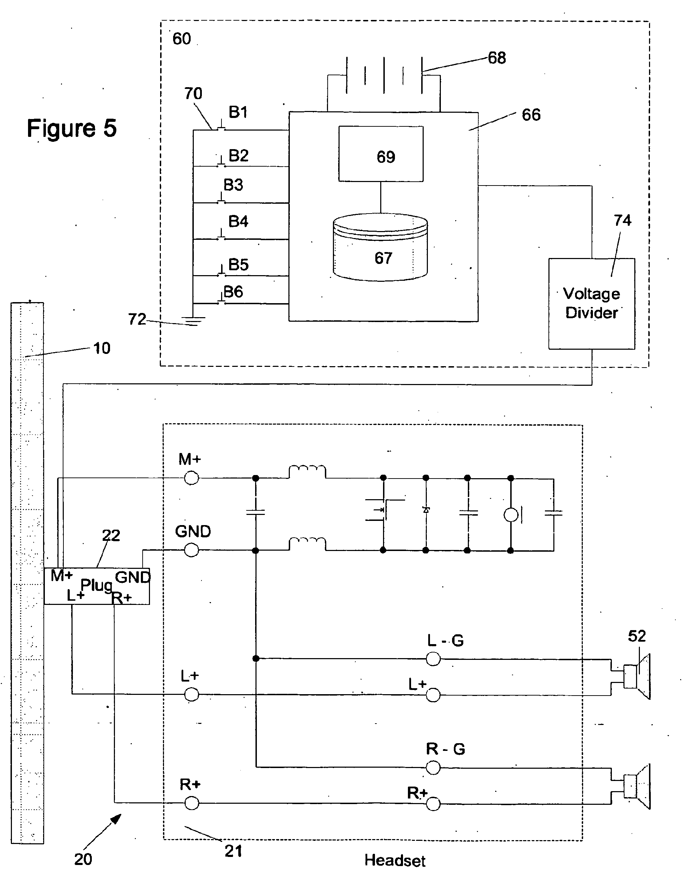

Turning to Figure 5, a second embodiment of a multiple button control **14** for a mobile communication device **10** is shown. In this embodiment, the output of the processor is directed connected directly to the jack **22,** however the output is transmitted through a voltage divider **74** which is used to ensure that the signal being transmitted to the jack is at a predetermined level comparable to the microphone output. Operation of the embodiment is in an identical manner with respect to the method outlined in Figure 6. However, the nature of the signals being transmitted by the processor differs. In this embodiment, when operating in Mode C, the control signals are transmitted at different frequencies such that the jack transmits the signal to the headset which deciphers the frequency and then performs the requested task. In an alternative embodiment, the output of the processor may also be connected to the FET **64.**

In one implementation, if B1 is pressed, the processor **66** transmits a signal at 3400Hz which is then received by the handset **10** via the jack **22.** Once the handset receives a signal at 3400Hz, the processor recognizes that B1 has been pressed. Similarly, if B2 is pressed, a signal is transmitted at 3600Hz to the mobile communication device. In order to prevent any interference, each of the frequencies which are selected and associated with the buttons are outside of the audible range so the user does not experience any interference or distraction.

The battery **68** allows the control to be self-sufficient and does not drain the battery within the mobile communication device. Therefore by utilizing a low power processor, the life of the battery **68** is prolonged and does not have to be changed on a constant basis. The importance of the battery is that no additional connection is required from the handset to provide power to the processor in the headset.

If the headset is operating under Mode D, the signals are selected and differentiated using DTMF.

In an alternative embodiment, the processor **66** may be replaced by an Application Specific Integrated Circuit (ASIC) to lower cost, power consumption and size of the control **16.**

In an alternative embodiment, where multiple encoding control signal modes are combined, different functionalities may be provided which are controlled via separate control signal modes. For instance Mode A may be used to control an MP3 player while Mode B may be used as a joystick to play a game on the mobile communication device. In this embodiment, the multiple button control includes a switch or control to determine which mode the headset is operating in order to ensure that the encoding is performed correctly by the processor **66.** Another embodiment may include the controller **16** being used as a multi-media control in one mode and as a phone dialer in a second mode.

The embodiment having multiple encoding control signal modes may also allow the headset to have a more universal use in that different handsets may require specific encoding control signal modes.

Alternatively, mobile communication devices may operate currently under one mode but in future implementations, may operate under a second mode. In this manner, the headset may be used for both the currently and future versions of a mobile communication device provide more flexibility to the user.

In the preceding description, for purposes of explanation, numerous details are set forth in order to provide a thorough understanding of the embodiments of a novel headset. However, it will be apparent to one skilled in the art that these specific details are not required in order to practice the invention. In other instances, well-known electrical structures and circuits are shown in block diagram form in order not to obscure the invention. For example, specific details are not provided as to whether the embodiments of the invention described herein are implemented as a software routine, hardware circuit, firmware, or a combination thereof.

The above-described embodiments of the invention are intended to be examples only. Alterations, modifications and variations can be effected to the particular embodiments by those of skill in the art without departing from the scope of the invention, which is defined solely by the claims appended hereto.

## Claims

1. A headset (12) for use with a mobile communication device having a set of speakers for transmitting sound to a user, comprising:
a standard headset jack plug (22)
a multi-button control (60) capable of activating commands on a mobile communication device, the mobile communication device having means for receiving said standard headset jack plug (22), the multi-button control (60) including:
a set of buttons (70), each representing one of said commands; and
a controller (66), connected to each button of said set of buttons (70);
wherein when said controller (66) detects the depression of one of said buttons in said set of buttons, said controller determines which button was pressed and transmits a control signal via a microphone line to said standard headset jack plug (22) corresponding to said button.

2. The headset of Claim 1 wherein said controller (66) is a processor or an application specific integrated circuit 'ASIC'.

3. The headset of Claim 1 or Claim 2 wherein said control signal is encoded in an encoding control signal mode.

4. The headset of Claim 3 wherein said encoding control signal mode comprises any of a pulse train control signal mode, a unique frequency control signal mode, a dual tone multiple frequency 'DTMF' control signal mode or a pulse width control signal mode.

5. The headset of Claim 4 wherein if said control signal mode is said pulse train control signal mode or said pulse width control signal mode, the headset further comprises:
a filter for limiting a slew rate of said control signal.

6. The headset of Claim 5 wherein said filter comprises an RC network.

7. The headset of any one of the preceding Claims wherein said controller further comprises:
a database (67) for storing control signal information associated with each of said set of buttons; and
a module (69) for associating said button depression with a control signal.

8. The headset of any one of the preceding Claims wherein said control signal is transmitted by said controller to a Field Effect Transistor 'FET' (64) within said headset for transmission to said standard headset jack plug.

9. The headset of any one of the preceding claims wherein multi-button control (60) further comprises a voltage divider (74).

10. The headset of Claim 9 wherein said control signal is transmitted to said standard headset jack plug via said voltage divider (74).

11. The headset of any one of the preceding Claims further comprising a battery for powering said controller.

12. The headset of Claim 11 wherein said battery comprises any of a rechargeable battery, a super capacitor or a one-time use battery.

13. The headset of any one of claims 1 to 10, wherein said controller is powered by a microphone bias voltage supplied by said mobile communication device when said standard headset jack plug (22) is received in said mobile communication device.

14. The headset of any one of the preceding Claims further comprising apparatus for indicating to said mobile communication device a presence of said multi-button control when said standard headset jack plug (22) is received in said mobile communication device.

15. The headset of any preceding claim adapted to control an audio function of the mobile communication device in which the commands include one or more of mute, volume up, volume down, rewind, fast forward and play/stop.

16. A mobile communication device having connected thereto the headset of any one of the preceding claims.

17. The mobile communication device of Claim 17 wherein said mobile communication device comprises a processor for receiving a control signal from said multi-button control of said headset and for executing an associated command.

## Patentansprüche

1. Headset (12) zur Verwendung mit einem mobilen Kommunikationsgerät, das über einen Lautsprechersatz zur Tonübertragung zu einem Benutzer verfügt und umfasst:
einen Standard-Kopfhörerklinkenstecker (22)
eine mehrere Knöpfe umfassende Steuerung (60), mit der Befehle auf einem mobilen Kommunikationsgerät aktiviert werden können, wobei das mobile Kommunikationsgerät über Mittel zum Aufnehmen des Standard-Kopfhörerklinkensteckers (22) verfügt, wobei die mehrere Knöpfe umfassende Steuerung (60) einschließt:
einen Satz von Knöpfen (70), von denen jeder einen der Befehle repräsentiert; und
eine Steuereinheit (66), die mit jedem Knopf aus dem Satz von Knöpfen (70) verbunden ist;
wobei die Steuereinheit (66) das Drücken von einem der Knöpfe in dem Satz von Knöpfen erkennt, durch die Steuereinheit ermittelt wird, welcher Knopf gedrückt wurde, und ein dem Knopf entsprechendes Steuersignal über eine Mikrofonleitung zu dem Standard-Kopfhörerklinkenstecker (22) sendet.

2. Headset gemäß Anspruch 1, wobei es sich bei der Steuereinheit (66) um einen Prozessor oder eine anwendungsspezifische integrierte Schaltung (Application-Specific Integrated Circuit - ASIC) handelt.

3. Headset gemäß Anspruch 1 oder Anspruch 2, wobei das Steuersignal in einem Steuersignal-Codierungsmodus codiert wird.

4. Headset gemäß Anspruch 3, wobei der Steuersignal-Codierungsmodus einen der folgenden Modi umfasst: einen Impulsketten-Steuersignalmodus, einen Signalsteuermodus mit eindeutiger Frequenz, einen Zweitonmehrfrequenz-(Dual Tone Multiple Frequency - DTMF)-Steuersignalmodus oder einen Impulsbreiten-Steuersignalmodus.

5. Headset gemäß Anspruch 4, wobei, wenn es sich bei dem Steuersignalmodus um den Impulsketten-Steuersignalmodus oder den Impulsbreiten-Steuersignalmodus handelt, das Headset ferner umfasst:
einen Filter zur Begrenzung einer Anstiegsgeschwindigkeit des Steuersignals.

6. Headset gemäß Anspruch 5, wobei der Filter ein RC-Netzwerk umfasst.

7. Headset gemäß einem der vorherigen Ansprüche, wobei die Steuereinheit ferner umfasst:
eine Datenbank (67) zum Speichern von Steuersignalinformationen, die jedem Knopf aus dem Satz von Knöpfen zugeordnet sind; und
ein Modul (69) zum Zuordnen des Drückens eines Knopfs zu einem Steuersignal.

8. Headset gemäß einem der vorherigen Ansprüche, wobei das Steuersignal durch die Steuereinheit an einen Feldeffekttransistor (FET) (64) innerhalb des Headsets übertragen wird, um zu dem Standard-Kopfhörerklinkenstecker übertragen zu werden.

9. Headset gemäß einem der vorherigen Ansprüche, wobei die mehrere Knöpfe umfassende Steuerung (60) ferner einen Spannungsteiler (74) umfasst.

10. Headset gemäß Anspruch 9, wobei das Steuersignal über den Spannungsteiler (74) zu dem Standard-Kopfhörerklinkenstecker übertragen wird.

11. Headset gemäß einem der vorherigen Ansprüche, ferner umfassend eine Batterie zur Stromversorgung der Steuereinheit.

12. Headset gemäß Anspruch 11, wobei es sich bei der Batterie um eine wiederaufladbare Batterie, um einen Superkondensator oder um eine Einwegbatterie handeln kann.

13. Headset gemäß einem der Ansprüche 1 bis 10, wobei die Steuereinheit durch eine Mikrofonvorspannung mit Strom versorgt wird, die durch das mobile Kommunikationsgerät bereitgestellt wird, wenn der Standard-Kopfhörerklinkenstecker (22) von dem mobilen Kommunikationsgerät aufgenommen wird.

14. Headset gemäß einem der vorherigen Ansprüche, ferner umfassend eine Vorrichtung, um dem mobilen Kommunikationsgerät das Vorhandensein der mehrere Knöpfe umfassenden Steuerung anzuzeigen, wenn der Standard-Kopfhörerklinkenstecker (22) von dem mobilen Kommunikationsgerät aufgenommen wird.

15. Headset gemäß einem der vorherigen Ansprüche, das dazu angepasst ist, eine Audiofunktion des mobilen Kommunikationsgeräts zu steuern, wobei die Befehle einen oder mehrere der folgenden einschließen: Stummschaltung, Lauter, Leiser, Schneller Rücklauf, Schneller Vorlauf und Wiedergabe/Stopp.

16. Mobiles Kommunikationsgerät, an welches das Headset gemäß einem der vorherigen Ansprüche angeschlossen ist.

17. Mobiles Kommunikationsgerät gemäß Anspruch 17, wobei das mobile Kommunikationsgerät einen Prozessor zum Empfangen eines Steuersignals von der mehrere Knöpfe umfassenden Steuerung des Headsets und zum Ausführen eines zugeordneten Befehls umfasst.

## Revendications

1. Un casque (12) pour une utilisation avec un dispositif de communication mobile ayant un ensemble de haut-parleurs pour transmettre le son à un utilisateur, comportant :
une fiche mâle de casque standard (22)
une commande à boutons multiples (60) capable d'activer des commandes sur un dispositif de communication mobile, le dispositif de communication mobile ayant un moyen pour recevoir ladite fiche mâle de casque standard (22), la commande à boutons multiples (60) comprenant :
un ensemble de boutons (70), représentant chacun une desdites commandes ; et
un contrôleur (66), connecté à chaque bouton dudit ensemble de boutons (70) ;
**caractérisé en ce que** quand ledit contrôleur (66) détecte la pression d'un desdits boutons dans ledit ensemble de boutons, ledit contrôleur détermine quel bouton a été pressé et transmet un signal de commande par l'intermédiaire d'une ligne de microphone à ladite fiche mâle de casque standard (22) correspondant audit bouton.

2. Le casque de la revendication 1 où ledit contrôleur (66) est un processeur ou un circuit intégré à application spécifique (« ASIC »).

3. Le casque de la revendication 1 ou de la revendication 2 où ledit signal de commande est codé dans un mode signal de commande de codage.

4. Le casque de la revendication 3 où ledit mode de signal de commande de codage comporte n'importe quel mode parmi un mode signal de commande par train d'impulsions, un mode de signal de commande par fréquence unique, un mode de signal de commande par multifréquence à deux tonalités (« DTMF ») ou un mode de signal de commande par impulsions variables en durée.

5. Le casque de la revendication 4 où si ledit mode de signal de commande est ledit mode de signal de commande par train d'impulsions ou ledit mode de signal de commande par impulsions variables en durée, le casque comporte de plus :
un filtre pour limiter une vitesse de balayage dudit signal de commande.

6. Le casque de la revendication 5 où ledit filtre comporte un réseau RC.

7. Le casque de n'importe laquelle des revendications précédentes où ledit contrôleur comporte de plus :
une base de données (67) pour stocker les informations de signal de commande associées à chaque bouton dudit ensemble de boutons ; et
un module (69) pour associer ladite pression de bouton à un signal de commande.

8. Le casque de n'importe laquelle des revendications précédentes où ledit signal de commande est transmis par ledit contrôleur à un transistor à effet de champ (« TEC ») (64) à l'intérieur dudit casque pour une transmission à ladite fiche mâle de casque standard.

9. Le casque de n'importe laquelle des revendications précédentes où la commande à boutons multiples (60) comporte de plus un diviseur de tension (74).

10. Le casque de la revendication 9 où ledit signal de commande est transmis à ladite fiche mâle de casque standard par l'intermédiaire dudit diviseur de tension (74).

11. Le casque de n'importe laquelle des revendications précédentes comportant de plus une pile pour alimenter ledit contrôleur.

12. Le casque de la revendication 11 où ladite pile comporte n'importe quelle pile parmi une pile rechargeable, un supercondensateur ou une pile à usage unique.

13. Le casque de n'importe laquelle des revendications 1 à 10, où ledit contrôleur est alimenté par un microphone par l'intermédiaire d'une tension fournie par ledit dispositif de communication mobile quand ladite fiche mâle de casque standard (22) est reçue dans ledit dispositif de communication mobile.

14. Le casque de n'importe laquelle des revendications précédentes comportant de plus un appareil pour indiquer audit dispositif de communication mobile une présence de ladite commande à boutons multiples quand ladite fiche mâle de casque standard (22) est reçue dans ledit dispositif de communication mobile.

15. Le casque de n'importe quelle revendication précédente adapté pour commander une fonction audio du dispositif de communication mobile dans laquelle les commandes comprennent une ou plusieurs fonction(s) parmi muet, augmenter le volume, baisser le volume, revenir en arrière, avance rapide et lecture/arrêt.

16. Un dispositif de communication mobile auquel est connecté le casque de n'importe laquelle des revendications précédentes.

17. Le dispositif de communication mobile de la revendication 17 où ledit dispositif de communication mobile comporte un processeur pour recevoir un signal de commande de ladite commande à boutons multiples dudit casque et pour exécuter une commande associée.
